# EUROPÄISCHE PATENTANMELDUNG

(11) **EP 1 763 987 A1**
(43) Veröffentlichungstag der Anmeldung: **21.03.2007**
(21) Anmeldenummer: 06019264.8
(22) Anmeldetag: 14.09.2006
(51) Int. Cl.: A01D 34/86

(54) **Mäh- und/oder Schneidgerät**

(30) Priorität: 14.09.2005 DE 202005014594 U
(71) Anmelder: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(57) **Zusammenfassung**

Ein Mäh- und/oder Schneidgerät (1) mit zumindest einem front- oder heckseitig an einem Fahrzeug (2) halterbaren und gegenüber diesem um eine zumindest nahezu vertikale Auslenkungsachse (11) schwenkbaren Ausleger (3), der zumindest einen Arbeitskopf (4) trägt, der zum Ausweichen vor einem Hindernis (15) gegenüber dem Ausleger (3) einschwenkbar ist, wird so ausgebildet, daß zum Ausweichen der Ausleger (3) gegenüber dem Fahrzeug (2) mit einer Komponente in Richtung einer vertikalen Fahrzeuglängsmittelebene (16) einwärts verlagerbar ist (Fig. 6).

## Beschreibung

Die Erfindung betrifft ein Mäh- und/oder Schneidgerät mit zumindest einem front- und/oder heckseitig an einem Fahrzeug halterbaren und gegenüber diesem beweglichen Ausleger, der zumindest einen Arbeitskopf trägt, nach dem Oberbegriff des Anspruchs 1.

Es ist bekannt, bei solchen Mäh- und/oder Schneidgeräten den Arbeitskopf mit einem Tastorgan in Form eines ihm in Fahrtrichtung vorgeordneten Bügels zu versehen, um bei Anprall des Bügels an ein Hindernis, zum Beispiel an einen Leitpfosten, den Tastbügel einzuschwenken und damit eine Hydraulik zu schalten, die ein Einschwenken des Arbeitskopfes um eine vertikale Achse des Auslegers bewirkt, so daß der Arbeitskopf in einer nicht mehr quer zur Fahrtrichtung stehenden Lage, sondern schräg oder längs zu dieser an dem Hindernis vorbeigeführt wird und nach dessen Passieren wieder zurückschwenkt, um die maximale Arbeitsbreite einzunehmen.

Da das Einschwenken des Mähkopfes vor dem Hindernis eine erhebliche Zeit benötigt, wird die mögliche Arbeitsgeschwindigkeit und -effektivität dadurch herabgesetzt. Zudem ergibt sich im Nahbereich des Hindernisses ein unbefriedigendes Mähbild.

Der Erfindung liegt das Problem zugrunde, eine Verbesserung für das Ausweichen des Arbeitskopfes vor einem Hindernis zu schaffen.

Die Erfindung löst dieses Problem durch ein Mäh- und/oder Schneidgerät mit den Merkmalen des Anspruchs 1. Hinsichtlich weiterer Ausgestaltungen wird auf die abhängigen Ansprüche 2 bis 12 verwiesen.

Durch die Erfindung ist mit der zweiten Ausweichbewegung auch des Auslegers das Vorbeiführen des Arbeitskopfes am Hindernis beschleunigt, da somit eine Freigabe bereits erreicht ist, wenn der Arbeitskopf nicht vollständig gegenüber dem Ausleger eingeschwenkt ist. Die Ausweichbewegung in Richtung der vertikalen Fahrzeuglängsmittelebene wird durch die Bewegung des Auslegers zusätzlich unterstützt.

Sehr einfach sind die Ausweichbewegungen des Arbeitskopfes und des Auslegers jeweils Schwenkbewegungen um einfache Achsen. Die Bewegungen sind dann schnell und auch im Dauerbetrieb unproblematisch ausführbar.

Eine gemeinsame Ansteuerung beider Bewegungen über ein dem Arbeitskopf vorgeordnetes Tastorgan stellt sicher, daß beide Bewegungen zeitgleich eingeleitet werden können.

Wenn die Antriebseinheiten jeweils hydraulisch sind, kann eine einfache Steuerung ohne Elektronikkomponenten Verwendung finden.

Insbesondere können die Hydraulikantriebe derart miteinander verschaltet sein, daß durch Ausfahren des einen Antriebs zwangsweise ein Einfahren des anderen Antriebs ohne weitere Steuerungselemente erreichbar ist. Hierzu können beide Hydraulikzylinder kolbenstangenseitig hydraulisch miteinander verbunden sein.

Die Effektivität der Vorrichtung ist weiter erhöht, wenn ein zweiter Mähkopf vorgesehen ist, der an einem in Betriebsstellung den Ausleger nach außen übergreifenden Arm gehalten sein und zum Beispiel hinter einer Reihe von Hindernissen arbeiten kann.

Besonders vorteilhaft ist über eine Steuerung die Größe des Einschwenkwinkels des Auslegers zum Umlaufen des Hindernisses voreinstellbar.

Ebenso kann auch der Winkel des Auslegers zum Fahrzeug im Normalbetrieb voreinstellbar sein, um damit in Fahrzeugquerrichtung ein unterschiedlich weites Ausgreifen des Auslegers und des daran gehaltenen Mähwerks zu ermöglichen. Damit kann zum Beispiel auf den jeweiligen Abstand einer Leitplanke zum Straßenrand reagiert werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht des vorderen Teils eines erfindungsgemäßen Mäh- und/oder Schneidgeräts mit zwei frontseitig an einem Fahrzeug angeordneten Arbeitsköpfen in Transportstellung,
- Fig. 2: den vorderen Teil des Mäh- und/oder Schneidgeräts nach Fig. 1 in Transportstellung in Ansicht von oben,

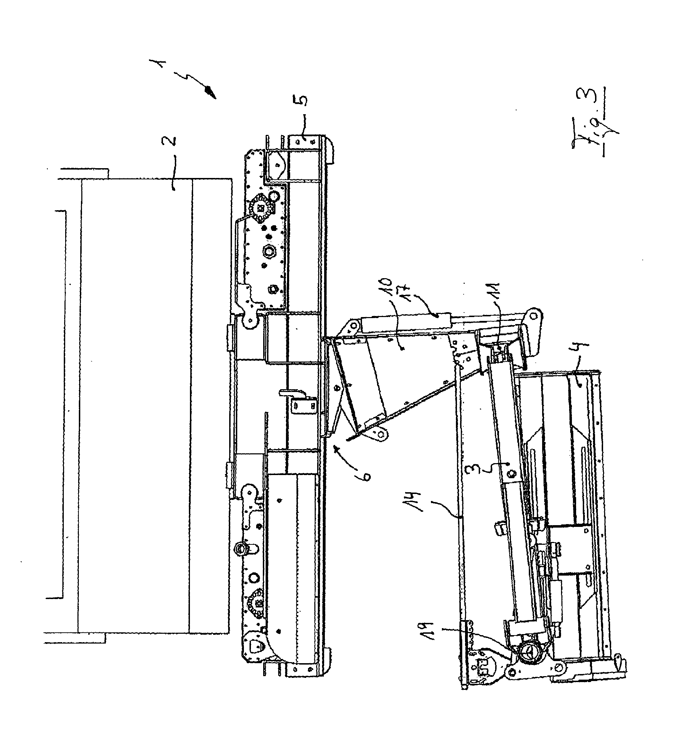

- Fig. 3: eine ähnliche Ansicht wie Fig. 2, wobei der zweite Arbeitskopf mit dem zugehörigen Arm der Übersicht halber nicht eingezeichnet ist,
- Fig. 4: das Mäh- und/oder Schneidgerät nach Fig. 3 in perspektivischer Ansicht von vorne, wobei der erste Arbeitskopf in Arbeitsstellung ausgeschwenkt ist und der zweite wiederum nicht eingezeichnet ist,
- Fig. 5: das Fahrzeug mit in Arbeitsstellung befindlichem erstem Arbeitskopf nach Fig. 4 in Ansicht von oben bei Annäherung an ein Hindernis, wiederum ohne zweiten Arbeitskopf gezeichnet,
- Fig. 6: eine ähnliche Ansicht wie Fig. 5 bei Erfassung des Hindernisses durch ein Tastorgan,
- Fig. 7: eine ähnliche Ansicht wie Fig. 6 während des Passierens des Hindernisses unter Einschwenken des Arbeitskopfes gegenüber dem Ausleger und gleichzeitigem Einschwenken des Auslegers gegenüber dem Fahrzeug,
- Fig. 8: eine ähnliche Ansicht wie Fig. 7 nach Passieren des Hindernisses und Rückschwenken sowohl des Arbeitskopfes als auch des Auslegers.

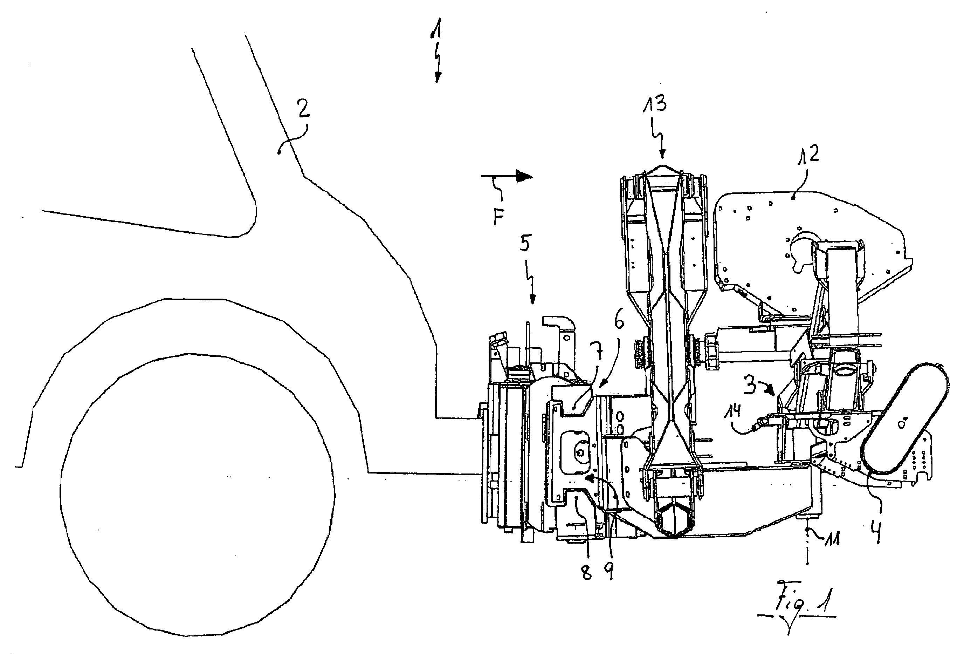

Das in Figur 1 dargestellte und insgesamt mit 1 bezeichnete Mäh- und/oder Schneidgerät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch ein Reinigungskopf oder dergleichen montierbar. Neben der hier gezeigten Frontmontage des Auslegers 3 kommt zusätzlich oder alternativ auch eine Montage auf der Ladefläche oder eine Heckmontage eines Auslegers 3 in Betracht.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich. Zudem kann die Arbeitsposition des Arbeitskopfes 4 von rechts auf links variiert werden.

Der Ausleger 3 ist an einem fahrzeugfesten Träger 5 montiert, der eine Querführungseinrichtung 6 mit hier zwei beabstandet zueinander angeordneten und quer zum Fahrzeug 2 verlaufenden Führungsschienen 7, 8, hier Horizontalprofilen, und einem daran zumindest quer zum Fahrzeug 2 verschieblichen Läufer 9 umfaßt.

Zwischen den Profilen 7 und 8 ist der Läufer 9 im gezeichneten Ausführungsbeispiel derart verschieblich halterbar, daß er mit einer Komponente von unten an der oberen Führungshilfe 7 und mit eine Komponente von oben an der unteren Führungshilfe 8 angreift und so an diesen abgestützt ist. Auch ein herkömmliches Übergreifen der oberen Führungsschiene 7 und Untergreifen der unteren Führungsschiene 8 ist alternativ möglich. Der Läufer 9 ist als Schlitten ausgebildet, also gleitbeweglich entlang den Führungsschienen 7, 8. Auch eine Bewegung über Rollen wäre prinzipiell möglich.

Der Läufer 9 trägt eine Konsole 10 des Auslegers 3, die eine von dieser umfaßte und hier vertikale Schwenkachse 11, um die herum der Ausleger 3 ein- und ausschwenkbar ist, umfaßt. Diese wird im folgenden als Auslenkungsachse bezeichnet. Sie muß nicht exakt vertikal stehen, sondern kann auch eine geringe Neigung gegen die Vertikale aufweisen.

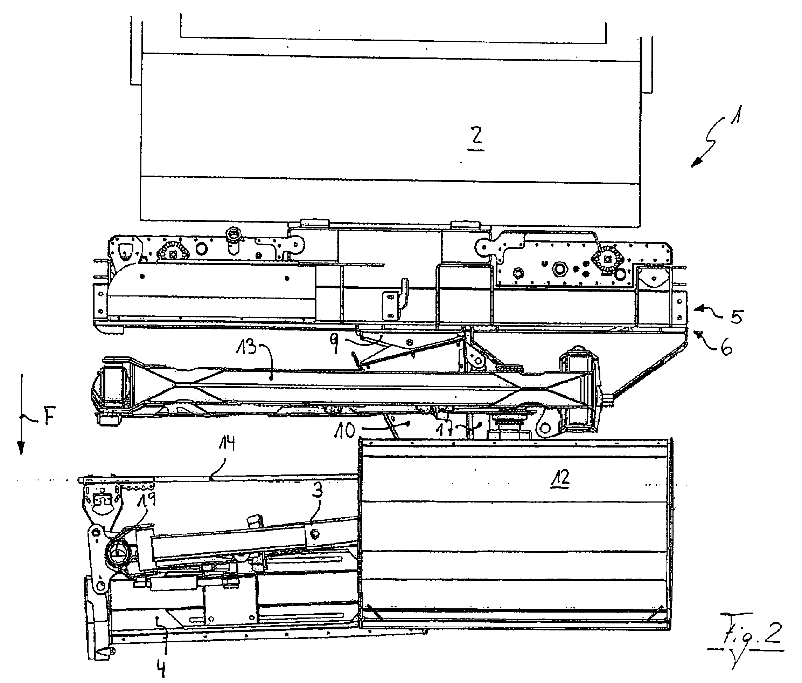

In den Figuren 1 und 2 ist optional ein weiterer Arbeitskopf 12 in seiner Transportstellung eingezeichnet, der an einem ausschwenkbaren Arm 13 gehalten ist und in seiner Arbeitsstellung über die Konsole 10 nach außen greifen kann, um zum Beispiel hinter einer Leitplanke, einer Reihe von Leitpfosten oder anderen Hindernissen gegenüber dem ersten Arbeitskopf 4 weiter außen zu arbeiten.

In der Transportstellung ist der erste Arbeitskopf 4 um die Achse 11 derart gelegen, daß ein in Arbeitsstellung als Erfassungsorgan 14 für Hindernisse 15 dienender Tastbügel entgegen der Fahrtrichtung F nach hinten weist.

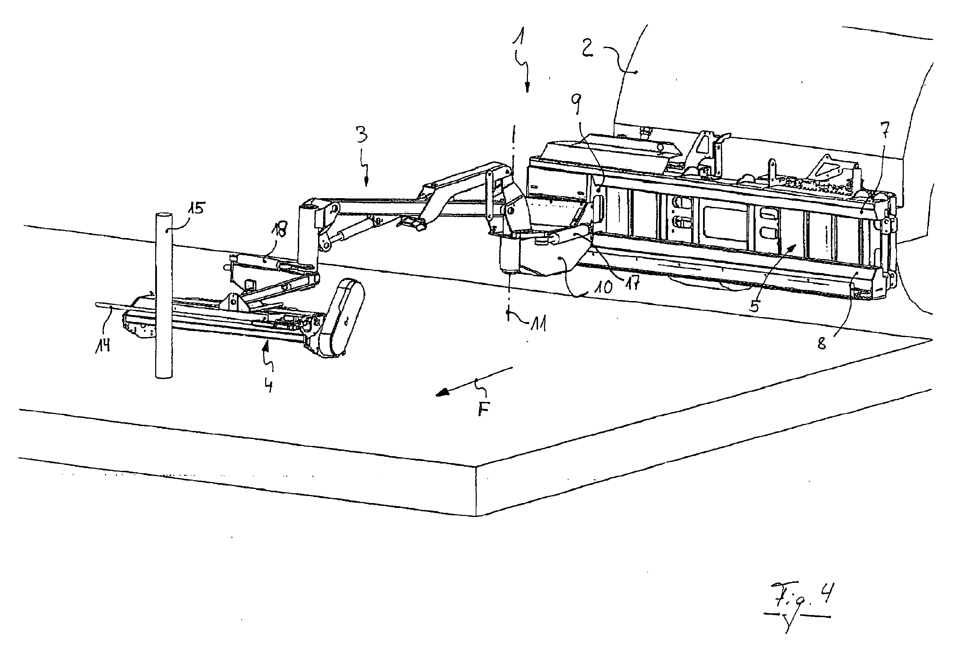

In einer ab Figur 4 gezeigten Arbeitsstellung des Arbeitskopfes 4 ist dieser derart gewendet, daß er in Fahrtrichtung F nach vorne weist. Anstelle des Tastbügels kann auch eine berührungsloses Hinderniserfassung vorgesehen sein. Für das Verschwenken des Auslegers 3 um die Achse 11 dient ein hydraulischer Antrieb 17, hier ein Hydraulikzylinder, der kolbenbodenseitig an de Konsole 10 und kolbenstangenseitig am Ausleger 3 angreift. Der Zylinder 17 könnte selbstverständlich auch andersherum liegen.

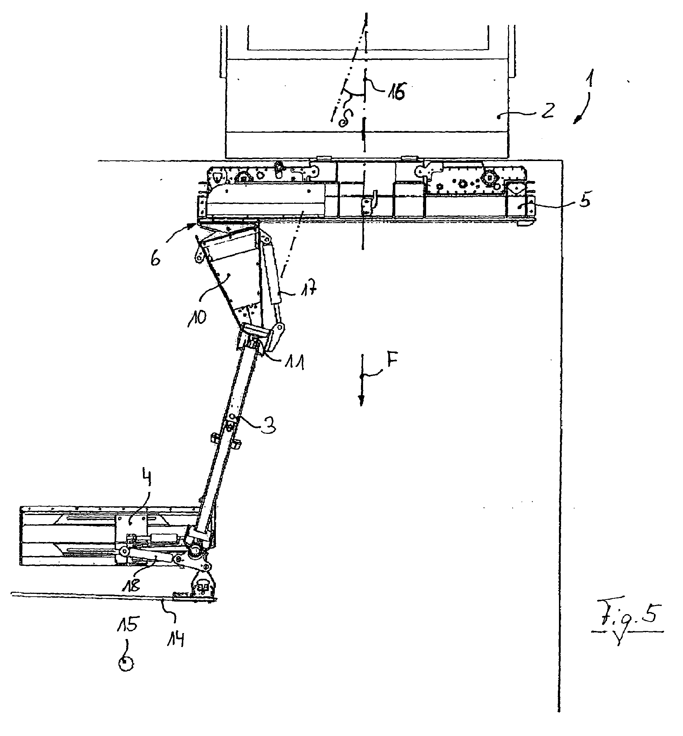

Auch der Ausleger 3 weist eine erhebliche Komponente in Fahrtrichtung F auf, wobei er gegenüber einer vertikalen Fahrzeuglängsmittelebene 16 abseits eines Hindernisses 15 um den Winkel δ nach quer außen - hier rechts vom Fahrzeug 2 aus, was nicht zwingend ist - ausgelenkt ist (Fig. 5). Die Größe des Auslenkungswinkels δ kann variabel und vom Führerhaus aus voreinstellbar sein, um damit ein unterschiedlich weites Ausgreifen des Auslegers 3, etwa um verschiedenen Abständen von Leitplanken zum Straßenrand Rechnung tragen zu können, zu ermöglichen. Mit einem veränderten Winkel δ kann zusätzlich jeweils automatisch der Winkel des Arbeitskopfes 4 gegenüber dem Auslegers 3 nachgestellt werden, so daß der Arbeitskopf stets optimiert ausgerichtet ist. Auch eine Anpassung der Schwenkbewegung des Auslegers 3 an die Bewegung des Arbeitskopfes 4 ist möglich: Am Drehpunkt 11 kann zum Beispiel ein Sensor vorgesehen sein, der die Nachstellung des Auslegers 3 entsprechend dem Einschwenken des Arbeitskopfes 4 vornimmt.

Der Arbeitskopf 4 selbst ist über einen zweiten hydraulischen Antrieb 18, hier einen Zylinder, der kolbenbodenseitig am Arbeitskopf 4 und kolbenstangenseitig am Ausleger 3 angreift, um die Achse 19 gegenüber dem Ausleger 3 schwenkbar, wobei die Achse 19 ebenfalls zumindest nahezu vertikal stehen kann.

Statt der Achsen 11 und 19 sind beispielsweise auch Mehrgelenkanordnungen und/oder Kulissenführungen für die Relativbewegungen möglich.

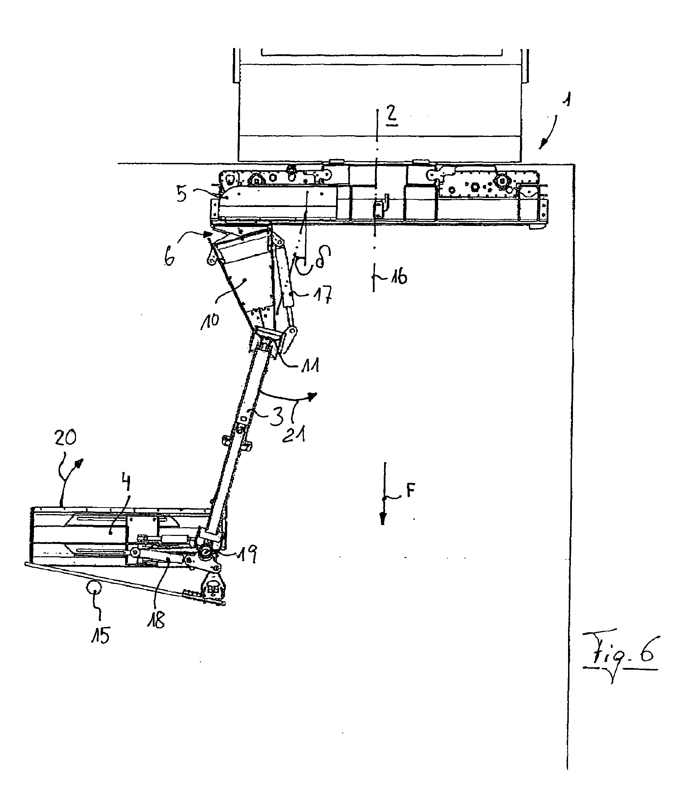

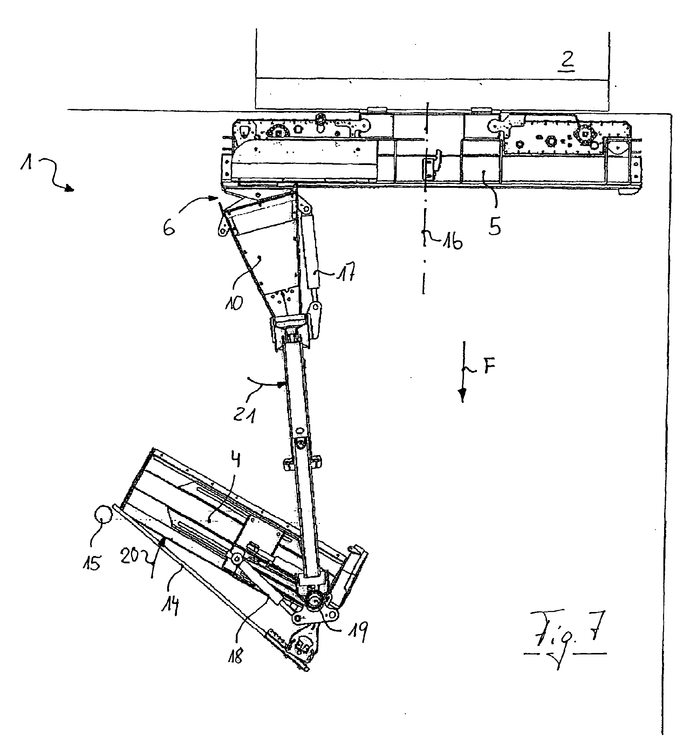

Bei Erfassung eines Hindernisses 15 über das Erfassungsorgan 14 (Fig. 6) schwenkt dieses einwärts und betätigt damit ein Hydraulikventil, das eine kolbenbodenseitige Beaufschlagung des Zylinders 18 mit Druckmittel und damit ein Ausfahren der zugehörigen Kolbenstange bewirkt, so daß der Arbeitskopf 4 in Draufsicht im Uhrzeigersinn in Richtung des Pfeils 20 einwärts verschwenkt (Übergang von Fig. 6 zu Fig. 7).

Da die Kolbenstangenseite des Zylinders 18 mit der des Zylinders 17 verschaltet ist, bewirkt ein Ausfahren des Zylinders 18 zwangsweise eine kolbenstangenseitige Druckmittelbeaufschlagung des Zylinders 17, so daß dieser gleichzeitig einfährt und somit den Ausleger 3 um die Achse 11 einwärts mit einer Komponente in Richtung der vertikalen Fahrzeuglängsmittelebene 16 verlagert. Im Ausführungsbeispiel ist die Verlagerung eine reine Schwenkbewegung um die Achse 11. Dieses Schwenken verläuft in Draufsicht gegensinnig zur Bewegung des Arbeitskopfes 4, also entgegen dem Uhrzeigersinn in Richtung des Pfeils 21. Auch die Größe dieses Einschwenkwegs - und damit auch des daran angepaßten gegensinnigen Schwenkens des Arbeitskopfes 4 - kann vorwählbar sein, beispielsweise über eine (elektronische) Steuerung. Je kleiner der voreingestellte Winkel ist, desto schneller kann die Bewegung erfolgen.

Die Hydraulikzylinder 17, 18 können unterschiedlich dimensioniert sein, so daß zum Beispiel der Arbeitskopf 4 um die Achse 19 schneller einschwenkt als der Ausleger 3 um die Achse 11.

Dadurch, daß die Verlagerungen des Auslegers 3 und des Arbeitskopfes 4 relativ zum Ausleger 3 gleichzeitig stattfinden, ist die Zeit für den Übergang aus der normalen Arbeitsstellung (Fig. 5) in die Ausweichstellung (Fig. 7) minimiert. Zudem behält der Arbeitskopf 4 auch in der Ausweichstellung noch eine nahezu quer zur Fahrtrichtung F erstreckte Lage. Dadurch ist zum Beispiel bei Ausbildung des Arbeitskopfes 4 als Mähkopf das Mähergebnis hier erheblich besser, als wenn der Arbeitskopf 4 weiter in eine nahezu längs zur Fahrtrichtung F erstreckte Lage gelangen müßte, wie dies bei herkömmlichen Lösungen der Fall ist.

Somit kann in dieser Ausweichstellung von Ausleger 3 und Arbeitskopf 4 das Hindernis 15 mit einem gegenüber bisherigen Lösungen deutlich geringer ausgelenkten Arbeitskopf 4 passiert werden (Fig. 7). Dadurch daß der Übergang zwischen Arbeits- und Ausweichstellung schneller geht, kann das Ausweichen auch später beginnen, so daß bis dicht vor dem Hindernis 15 die normale Arbeitsstellung beibehalten werden kann (Fig. 6). Auch dadurch kann das Mähergebnis im Nahbereich des Hindernisses 15 deutlich verbessert werden.

Sowohl die Schwenkbewegung des Auslegers 3 als auch die des Arbeitskopfes 4 können durch Winkelsensoren abgebremst werden. Anschläge sind dann nicht erforderlich.

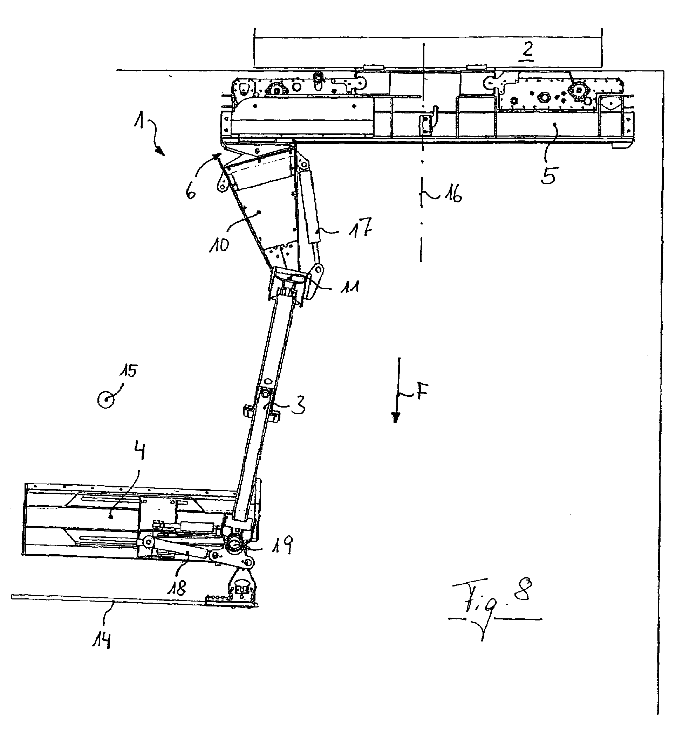

Nach Passieren des Hindernisses 15 können dann die Einwärtsverlagerung des Auslegers 3 und die des Arbeitskopfes 4 gegenüber dem Ausleger 3, die, wie oben bereits erwähnt, keine (reinen) Schwenkbewegungen sein müssen, ebenfalls beschleunigt und zeitgleich oder kurz nacheinander zu der normalen Arbeitsstellung nach Fig. 8 rückgängig gemacht werden. Hierzu können auch entsprechende Federbeaufschlagungen unterstützend wirken.

### Bezugszeichenliste:

- 1: Mäh- und/oder Schneidgerät,
- 2: Fahrzeug,
- 3: Ausleger,
- 4: Arbeitskopf,
- 5: Träger,
- 6: Querführungseinrichtung,
- 7: Führungsschiene,
- 8: Führungsschiene,
- 9: Läufer,
- 10: Konsole,
- 11: Auslenkungsachse,
- 12: weiterer Arbeitskopf,
- 13: Arm,
- 14: Erfassungsorgan,
- 15: Hindernis,
- 16: vertikale Längsmittelebene,
- 17: Hydraulikantrieb,
- 18: Hydraulikantrieb,
- 19: Schwenkachse,
- 20: Schwenkrichtung,
- 21: Schwenkrichtung,
- F: Fahrtrichtung

## Patentansprüche

1. Mäh- und/oder Schneidgerät (1) mit zumindest einem front- oder heckseitig an einem Fahrzeug (2) halterbaren und gegenüber diesem um eine zumindest nahezu vertikale Auslenkungsachse (11) verlagerbaren Ausleger (3), der zumindest einen Arbeitskopf (4) trägt, der zum Ausweichen vor einem Hindernis (15) gegenüber dem Ausleger (3) einschwenkbar ist,
**dadurch gekennzeichnet,**
**daß** zum Ausweichen der Ausleger (3) gegenüber dem Fahrzeug (2) mit einer Komponente in Richtung einer vertikalen Fahrzeuglängsmittelebene (16) einwärts verlagerbar ist.

2. Mäh- und/oder Schneidgerät nach Anspruch 1,
**dadurch gekennzeichnet,**
**daß** die Einwärtsverlagerungsbewegung des Auslegers (3) eine Schwenkbewegung (21) um eine zumindest nahezu vertikale Achse (11) umfaßt.

3. Mäh- und/oder Schneidgerät nach Anspruch 2,
**dadurch gekennzeichnet,**
**daß** die Schwenkbewegung (21) des Auslegers (3) gegenüber dem Fahrzeug (2) gegensinnig zu der Einschwenkbewegung (20) des Arbeitskopfes (4) gegenüber dem Ausleger (3) verläuft.

4. Mäh- und/oder Schneidgerät nach einem der Ansprüche 1 bis 3,
**dadurch gekennzeichnet,**
**daß** sowohl das Einschwenken (20) des Arbeitskopfes (4) gegenüber dem Ausleger (3) als auch das Einwärtsverlagern (21) des Auslegers gegenüber dem Fahrzeug (2) mittels eines dem Arbeitskopf (4) zugeordneten Erfassungsorgans (14) bewirkbar sind.

5. Mäh- und/oder Schneidgerät nach Anspruch 4,
**dadurch gekennzeichnet,**
**daß** das Erfassungsorgan (14) durch einen um eine zumindest nahezu vertikale Achse einschwenkbaren Tastbügel gebildet ist.

6. Mäh- und/oder Schneidgerät (1) nach einem der Ansprüche 1 bis 5,
**dadurch gekennzeichnet,**
**daß** die Einwärtsverlagerungen (20;21) des Arbeitskopfes (4) gegenüber dem Ausleger (3) und des Auslegers (3) gegenüber dem Fahrzeug (2) gleichzeitig bewirkbar sind.

7. Mäh- und/oder Schneidgerät (1) nach Anspruch 6,
**dadurch gekennzeichnet,**
**daß** für die Einwärtsverlagerungen (20;21) miteinander verschaltete Hydraulikantriebe (17;18) vorgesehen sind.

8. Mäh- und/oder Schneidgerät (1) nach Anspruch 7,
**dadurch gekennzeichnet,**
**daß** zumindest ein Hydraulikzylinder (17) sich von einer dem Fahrzeug (2) vorgelagerten Konsole (10) zum Ausleger (3) und ein weiterer Hydraulikzylinder (18) sich von dem Arbeitskopf (4) zu einem auswärts weisenden Ende des Auslegers (3) erstreckt.

9. Mäh- und/oder Schneidgerät nach Anspruch 8,
**dadurch gekennzeichnet,**
**daß** die Hydraulikzylinder (17;18) kolbenstangenseitig hydraulisch miteinander verbunden sind.

10. Mäh- und/oder Schneidgerät nach einem der Ansprüche 1 bis 9,
**dadurch gekennzeichnet,**
**daß** dieses zumindest einen zweiten Mähkopf (12) umfaßt, der an einem den Ausleger (3) übergreifenden Arm (13) auswärts in Arbeitsstellung verlagerbar ist.

11. Mäh- und/oder Schneidgerät nach einem der Ansprüche 1 bis 10,
**dadurch gekennzeichnet,**
**daß** über eine elektronische Steuerung die Größe des Einschwenkwinkels (Pfeil 21) des Auslegers (3) und/oder die Größe des Einschwenkwinkels (Pfeil 20) des Arbeitskopfes (4) Pfeil zum Umlaufen eines Hindernisses (15) voreinstellbar ist.

12. Mäh- und/oder Schneidgerät nach einem der Ansprüche 1 bis 11,
**dadurch gekennzeichnet,**
**daß** der Winkel (δ) des Auslegers (3) zum Fahrzeug (1) im Normalbetrieb voreinstellbar ist.
